# EUROPÄISCHE PATENTSCHRIFT

(11) **EP 3 034 217 B1**
(45) Veröffentlichungstag und Bekanntmachung des Hinweises auf die Patenterteilung: **21.11.2018**
(21) Anmeldenummer: 14004308.4
(22) Anmeldetag: 19.12.2014
(51) Int. Cl.: B23D 59/00, B23Q 11/00, B27B 5/065

(54) **Anordnung aus einem Spanabsaugkanal für eine Sägeeinrichtung, und einem Spanabsaugstutzen, und Verfahren zur Herstellung einer solchen Anordnung**
Arrangement of a chip suction channel for a sawing device, and a chip suction nozzle, and method for producing such an arrangement
Agencement d'un canal d'aspiration de copeaux pour un dispositif de sciage, et d'une buse d'aspiration de copeaux, et procédé pour produire un tel agencement

(43) Veröffentlichungstag der Anmeldung: 22.06.2016
(73) Patentinhaber: Schelling Anlagenbau GmbH, 6858 Schwarzach (AT)
(72) Erfinder: Pöschl, Wolfgang, 6844 Altach (AT)
(74) Vertreter: Fechner, Thomas

(56) Entgegenhaltungen:
- AT-B- 382 812
- AT-B- 397 222
- DE-U1- 29 811 070
- DE-U1-202011 101 665

## Beschreibung

Die vorliegende Erfindung betrifft eine Anordnung gemäß des Oberbegriffs des Patentanspruchs 1.

Spanabsaugkanäle gattungsgemäßer Anordnungen, wie sie z.B. in der DE 298 11 070 U1 gezeigt sind, werden beim Stand der Technik dazu verwendet, die beim Zersägen eines Werkstücks vom Sägeblatt produzierten Sägespäne abzusaugen. Spanabsaugkanäle dieser Art kommen bei Sägeeinrichtungen zum Einsatz, bei welchem das Sägeblatt, insbesondere während des Sägevorgangs, entlang einer Sägelinie verfahrbar ist. Sägeeinrichtungen dieser Art sind häufig auch als größere, sogenannte Plattenaufteilanlagen ausgestaltet. Der Spanabsaugkanal hat einen längserstreckten Transporthohlraum, durch den hindurch die Sägespäne abtransportiert werden. Der Transporthohlraum ist zumindest teilweise von einer Kanalwand des Spanabsaugkanals umgeben.

Die Kanalwände gattungsgemäßer Spanabsaugkanäle werden beim Stand der Technik üblicherweise aus abgekantetem Blech hergestellt. Die AT 397 222 B zeigt einen Spanabsaugkanal, welcher aus ineinander teleskopierbar gelagerten Rohren gebildet wird. In der gattungsfremden DE 20 2011 101 665 U1 sind Überdruck- und Unterdruckluftkanäle in Form von Strangpressprofilen genannt.

Aufgabe der Erfindung ist es, eine alternative Art eines Spanabsaugkanals für eine gattungsgemäße Anordnung vorzuschlagen, welche eine möglichst große Gestaltungsfreiheit bei der Ausbildung der Form des Spanabsaugkanals ermöglicht und möglichst strömungsgünstig ist.

Gemäß der Erfindung ist hierzu eine Anordnung gemäß des Patentanspruchs 1 vorgesehen.

Durch die Erfindung ergibt sich ein sehr hoher Grad an Gestaltungsfreiheit. Es können unterschiedlichste Querschnittsprofile der Kanalwand und insbesondere des von ihr zumindest teilweise umgebenen Transporthohlraums realisiert werden. Dies kann dazu benutzt werden, strömungsgünstige Querschnittsprofile des Transporthohlraums herzustellen, sodass die zum Absaugen der Sägespäne durch den Transporthohlraum benötigte Saugleistung reduziert werden kann. Darüber hinaus hat die Erfindung auch den Vorteil, dass erfindungsgemäße Spanabsaugkanäle durch Strangpressen, gegebenenfalls mit nachfolgendem Zusammensetzen der Strangpressprofile, relativ günstig hergestellt werden können. Besonders bevorzugte Ausgestaltungsformen der Erfindung sehen vor, dass das Strangpressprofil oder die Strangpressprofile Aluminium aufweist bzw. aufweisen oder daraus besteht bzw. bestehen. Natürlich können erfindungsgemäße Strangpressprofile auch aus anderen Materialien, insbesondere Metallen, hergestellt sein.

Wie oben bereits ausgeführt, kann die Kanalwand als ein einziges, in sich einstückig zusammenhängendes Strangpressprofil oder als Teilbereich eines einzigen, in sich einstückig zusammenhängenden Strangpressprofils ausgeführt sein. Es kann aber auch vorgesehen sein, dass sich die vollständige Kanalwand erst durch Zusammensetzen von zwei oder mehr Strangpressprofilen oder von Teilbereichen von zwei oder mehr Strangpressprofilen ergibt. So können z.B. zwei oder mehr Strangpressprofile oder Teilbereiche von zwei oder mehr Strangpressprofilen hintereinander folgend zusammengesetzt werden, z.B. um eine sehr lange Kanalwand zu realisieren. Es ist aber auch möglich, dass der Gesamtumfang der Kanalwand erst durch Zusammensetzen von zwei oder mehr Strangpressprofilen oder Teilbereichen von zwei oder mehr Strangpressprofilen entsteht. Die einzelnen Strangpressprofile werden dann bevorzugt an parallel zur Längserstreckung des Transporthohlraums verlaufenden Grenzflächen zusammengesetzt. Dies z.B. dann, wenn der von der Kanalwand zumindest teilweise umgebene Transporthohlraum einen sehr großen Öffnungsquerschnitt hat. Natürlich sind auch Kombinationen der unterschiedlichen Varianten möglich.

Bei erfindungsgemäßen Anordnungen ist vorgesehen, dass die den Transporthohlraum begrenzende Oberfläche der Kanalwand so ausgebildet wird, dass dem beim Absaugen transportierten Gemisch aus Luft und Sägespänen innerhalb des Transporthohlraums ein Drall mitgegeben wird. Hierdurch können die Absauggeschwindigkeit innerhalb des Transporthohlraums und der Energieverbrauch der die Luftströmung im Spanabsaugkanal erzeugenden Absauganlage deutlich reduziert werden. Im Sinne einer strömungsgünstigen Ausgestaltung erfindungsgemäßer Spanabsaugkanäle sieht die Erfindung vor, dass die den Transporthohlraum begrenzende Oberfläche der Kanalwand, in einem Querschnitt normal zur Längserstreckung des Transporthohlraums gesehen, zumindest bereichsweise gerundet ausgebildet ist. Hierdurch werden Ecken und Kanten im Transporthohlraum vermieden, in welchen sich Sägespäne ablagern könnten, was immer zu einer Verschlechterung der Strömungsverhältnisse im Transporthohlraum führen würde. Im Gegensatz zu den beim Stand der Technik zur Herstellung der Kanalwand angewendeten Abkantverfahrens hat das erfindungsgemäße Strangpressen in diesem Zusammenhang den besonderen Vorteil, dass mittels Strangpressen, gegebenenfalls mit nachfolgendem Zusammensetzen der Strangpressprofile, sehr einfach und kostengünstig Spanabsaugkanäle hergestellt werden können, welche bereichsweise gerundet ausgebildete, den Transporthohlraum begrenzende Oberflächen der Kanalwand aufweisen.
Besonders bevorzugte Ausgestaltungsformen sehen vor, dass der Krümmungsradius aller gerundet ausgebildeten Bereiche der den Transporthohlraum begrenzenden Oberfläche der Kanalwand, in dem Querschnitt normal zur Längserstreckung des Transporthohlraums gesehen, größer als das Zehnfache, vorzugsweise größer als das Zwanzigfache, der Dicke der Kanalwand ist. Es ist auch günstig, wenn die den Transporthohlraum begrenzende Oberfläche der Kanalwand, in dem Querschnitt normal zur Längserstreckung des Transporthohlraums gesehen, zu zumindest 30%, vorzugsweise zu zumindest 50 %, ihres Gesamtumfangs gerundet ausgebildet ist. Es muss dabei aber nicht zwingend vorgesehen sein, dass die gesamte, den Transporthohlraum begrenzende Oberfläche der Kanalwand, in dem genannten Querschnitt gesehen, gerundet ausgebildet ist. Es ist vielmehr durchaus möglich, dass die den Transporthohlraum begrenzende Oberfläche der Kanalwand, in dem Querschnitt normal zur Längserstreckung des Transporthohlraums gesehen, neben den gerundet ausgebildeten Bereichen auch gerade Bereiche aufweist. Es sollten aber möglichst keine Ecken vorhanden sein. Es muss sich aber nicht zwingend um kreisrunde Querschnitte handeln. Im genannten Querschnitt gesehen, kann die den Transporthohlraum begrenzende Oberfläche also durchaus eine von der kreisrunden Ausgestaltung abweichende Form aufweisen.

Bezüglich der hier verwendeten Begriffe wird zunächst darauf hingewiesen, dass es sich bei einem Spanabsaugkanal um einen Kanal handelt, durch den die beim Sägen vom Sägeblatt erzeugten Sägespäne und der dabei entstehende Staub abgesaugt werden können. Der Spanabsaugkanal ist dabei wie der in ihm vorhandene Transporthohlraum längserstreckt. Mit dem Begriff der Sägespäne sind der Einfachheit halber alle beim Sägevorgang entstehenden, absaugbaren Partikel gemeint. Im Sinne einer sprachlichen Vereinfachung umfasst der Begriff der Sägespäne, also die Sägespäne an sich wie auch den beim Sägen entstehenden Staub, sowie andere über den Spanabsaugkanal absaugbare Kleinpartikel. Die Kanalwand ist die Wand bzw. der Wandabschnitt, von dem der Transporthohlraum zumindest teilweise umgeben ist. Der Transporthohlraum ist der Hohlraum des Spanabsaugkanals, durch den die Sägespäne hindurch abgesaugt werden. Das oder die Strangpressprofile sind bevorzugt einstückig und/oder als gegebenenfalls jeweils ein in sich starrer Körper ausgebildet. Es kann die Kanalwand sein oder die Kanalwand und andere Bestandteile aufweisen. Die Kanalwand kann, wie bereits ausgeführt, auch aus mehreren Strangpressprofilen oder Teilbereichen von Strangpressprofilen zusammengesetzt sein. Die Längserstreckung des Spanabsaugkanals bzw. des in ihm angeordneten Transporthohlraums ist günstigerweise parallel zur Sägelinie angeordnet. Die Querschnittsfläche, normal zur Längserstreckung des Transporthohlraums gesehen, ist günstigerweise über die gesamte Länge des Spanabsaugkanals oder zumindest im Bereich der gesamten Längserstreckung der Sägelinie konstant.

Zur Aussteifung des Spanabsaugkanals sehen bevorzugte Ausgestaltungsformen der Erfindung vor, dass das Strangpressprofil oder die Strangpressprofile, vorzugsweise jeweils, zumindest eine außen an der Kanalwand angeordnete, vorzugsweise zumindest einen zusätzlichen Hohlraum einschließende, Versteifungswand zur Versteifung der Kanalwand aufweist.

Um die vom Sägeblatt erzeugten Sägespäne in den Transporthohlraum des Spanabsaugkanals hineintransportieren zu können, sieht die Erfindung vor, dass die Kanalwand einen entlang der Längserstreckung des Transporthohlraums verlaufenden Öffnungsschlitz zum Einführen eines Spanabsaugstutzens von außen in den Transporthohlraum aufweist. Insbesondere in diesen Ausgestaltungsformen umgibt die Kanalwand, in dem Querschnitt normal zur Längserstreckung des Transporthohlraums gesehen, den Transporthohlraum also nicht vollständig. Zum Abdecken des Öffnungsschlitzes kann der Spanabsaugkanal eine Abdecklippe aufweisen. Diese ist vorzugsweise elastisch ausgebildet, z.B. aus einem Elastomer wie beispielsweise Gummi oder dergleichen. Alternativ zur elastischen Ausbildung kann die Abdecklippe auch plattenartig in sich steif ausgeführt und gelenkig an der Kanalwand befestigt sein, um so den Öffnungsschlitz freigeben und abdecken zu können. Bevorzugt ist jedenfalls vorgesehen, dass die Abdecklippe reversibel zwischen einer Abdeckstellung, in der sie den Öffnungsschlitz abdeckt, und einer Auslenkstellung zum Einführen des Spanabsaugstutzens von außen in den Transporthohlraum auslenkbar ist. Die Kanalwand und die Abdecklippe sind dabei günstigerweise so aufeinander abgestimmt, dass die Kanalwand und die sich in der Abdeckstellung befindende Abdecklippe den Transporthohlraum zusammen umfangsgeschlossen umgeben. Um die Abdecklippe des Spanabsaugkanals in einfacher Art und Weise am Strangpressprofil und damit an der Kanalwand anbringen zu können, sehen bevorzugte Varianten vor, dass das Strangpressprofil oder die Strangpressprofile eine entlang des Öffnungsschlitzes verlaufende Aufnahme für eine bzw. die Abdecklippe aufweist bzw. aufweisen. Weiters ist es im Sinne einer abdichtenden Anlage der Anlageleiste am Strangpressprofil in der Abdeckstellung günstig, wenn das Strangpressprofil oder die Strangpressprofile eine entlang des Öffnungsschlitzes verlaufende Anlageleiste für eine bzw. die Abdecklippe aufweist bzw. aufweisen. An dieser Anlageleiste kann auch der Spanabsaugstutzen anliegen bzw. geführt sein.
Um den oben bereits erwähnten Drall im abgesaugten Luftstrom zu erzeugen, sieht die Erfindung auch vor, dass der Spanabsaugstutzen, in dem Querschnitt normal zur Längserstreckung des Transporthohlraums gesehen, tangential in den Transporthohlraum mündet. Bei einem Verfahren zur Herstellung eines erfindungsgemäßen Spanabsaugkanals ist vorgesehen, dass die Kanalwand als ein Strangpressprofil oder als ein Teilbereich eines Strangpressprofils hergestellt wird oder aus zumindest zwei Strangpressprofilen oder aus Teilbereichen von zumindest zwei Strangpressprofilen zusammengesetzt wird. Darüber hinaus betrifft die Erfindung auch eine Sägeeinrichtung mit zumindest einem entlang einer Sägelinie verfahrbaren Sägeblatt und einer erfindungsgemäßen Anordnung mit einem Spanabsaugkanal zum Absaugen von vom Sägeblatt erzeugten Sägespänen.
Weitere Merkmale und Einzelheiten bevorzugter Ausgestaltungsformen der Erfindung werden anhand der nachfolgenden Figurenbeschreibung erläutert. Es zeigen:
Fig. 1 eine schematisierte Darstellung einer Sägeeinrichtung mit einer erfindungsgemäßen Anordnung;
Fig. 2 den Schnitt entlang der Schnittlinie AA aus Fig. 1 und
Fig. 3 bis 5 Querschnitte durch den erfindungsgemäßen Spanabsaugkanal der vorab gezeigten Sägeeinrichtung.

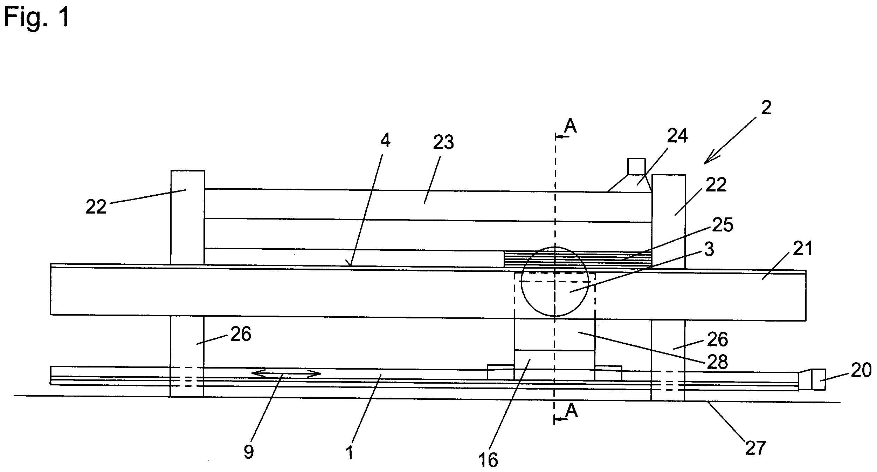

Fig. 1 zeigt eine Frontalansicht in Transportrichtung des Werkstücks 25 auf die Sägelinie 4 einer Sägeeinrichtung 2. Zu sehen sind zunächst zahlreiche beim Stand der Technik an sich bekannte Merkmale einer Sägeeinrichtung 2 bzw. Plattenaufteilanlage, welche in der Folge hier nur kurz zur Erläuterung genannt werden. Grundsätzlich sei darauf hingewiesen, dass erfindungsgemäße Spanabsaugkanäle 1 bei sehr unterschiedlich ausgestalteten Sägeeinrichtungen 2 zum Einsatz kommen können.

Im hier gezeigten Ausführungsbeispiel weist die Sägeeinrichtung 2 einen Maschinentisch 21 auf. Auf diesem liegt das zu zersägende Werkstück 25, welches hier ein Plattenstapel ist. Das Werkstück 25 wird entweder von Hand oder von einer hier nicht dargestellten Vorschubeinrichtung der Sägeeinrichtung zur Sägelinie 4 transportiert. Entlang der Sägelinie 4, welche in Fig. 1 in der Blattebene oder parallel dazu liegt, ist das Sägeblatt 3, hier ein Kreissägeblatt, verschiebbar gelagert. Konkret ist das Sägeblatt 3 hier in einem Sägewagen 28 gelagert. Das Sägeblatt 3 kann, wie an sich bekannt und in Fig. 1 dargestellt, so weit angehoben werden, dass es das Werkstück 25 zersägen kann. Zum Rücktransport kann das Sägeblatt 3 aber günstigerweise auch so weit in den Sägewagen 28 abgesenkt werden, dass es nicht mehr über die Oberkante des Maschinentisches 21 übersteht. Das Sägeblatt 3 kann mit dem Sägewagen 28 so weit entlang der Sägelinie 4 verfahren werden, dass die gesamte Arbeitsbreite zwischen den Stehern 22 zum Zersägen von Werkstücken 25 genutzt werden kann. Die Steher 22 tragen einen an sich bekannten Druckbalken 23. Dieser drückt, wie an sich bekannt, das Werkstück 25 während des Sägevorgangs auf den Maschinentisch 21. Der Druckbalken 23 hat in dem hier gezeigten Ausführungsbeispiel auch einen Druckbalkenabsaugstutzen 24 aufweisen. Dieser dient zum Absaugen von Sägespänen, welche beim Sägevorgang nach oben in den Druckbalken 23 geschleudert werden. Die bisher geschilderten Bauteile der Sägeeinrichtung 2 stehen mit den Füßen 26 auf dem Boden 27. Unterhalb des Maschinentisches 21 ist im gezeigten Ausführungsbeispiel der erfindungsgemäße Spanabsaugkanal 1 angeordnet. Eine an sich bekannte Absauganlage 22 saugt die Sägespäne zusammen mit Luft aus dem Sägewagen 28 durch den Spanabsaugstutzen 16 in den Transporthohlraum 5 des Spanabsaugkanals 1 und dann entlang des Transporthohlraums 5 hin zur Absauganlage 20.

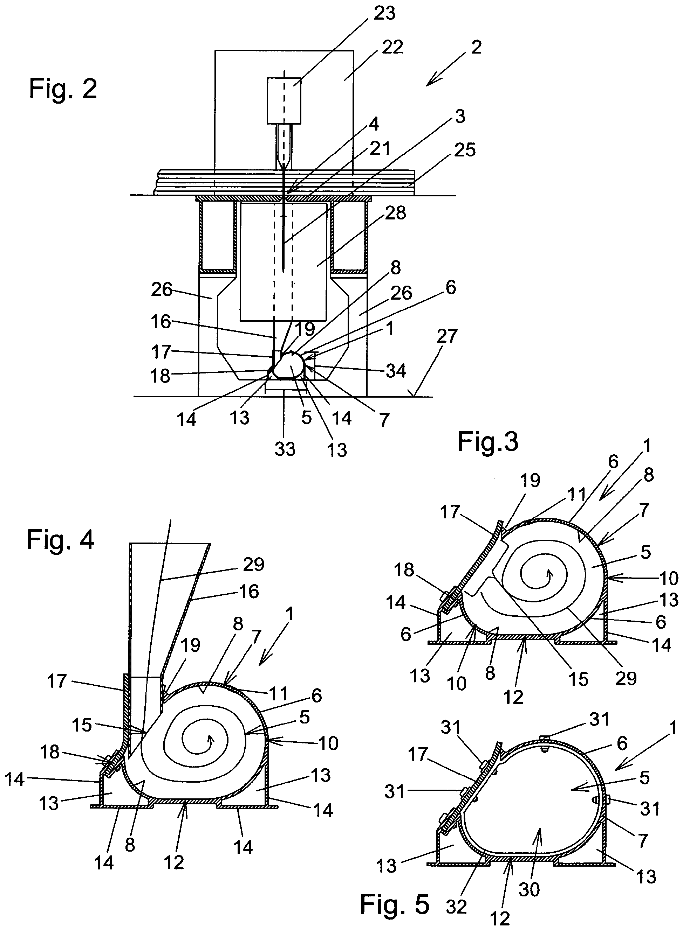

Im Schnitt AA gemäß Fig. 2 ist die Anordnung des Sägewagens 28, des Spanabsaugstutzens 16 und des hier in einem Querschnitt normal auf die Längserstreckung 9 des Transporthohlraums 5 dargestellten Spanabsaugkanals 1 besonders gut zu erkennen. Der Spanabsaugstutzen 16 ist durch einen Öffnungsschlitz 15 in der Kanalwand 6 hindurch von außen in den Transporthohlraum 5 eingeführt. Der Öffnungsschlitz 15 erstreckt sich in der Kanalwand 6 entlang der Längserstreckung 9 des Transporthohlraums 5. Dies ermöglicht es, dass der am Sägewagen 28, vorzugsweise fix, angeordnete Spanabsaugstutzen 16 entlang des Öffnungsschlitzes 15 und damit auch entlang des Transporthohlraums 5 im Spanabsaugkanal 1 verfahren werden kann, wenn das Sägeblatt 3, insbesondere beim Sägevorgang, entlang der Sägelinie 4 bewegt wird.

Um den für den Spanabsaugkanal 1 benötigten Bauraum unterhalb des Maschinentisches 21 möglichst gering zu halten, sehen bevorzugte wie die hier gezeigte Ausgestaltungsform vor, dass die Breite 33 des Spanabsaugkanals 1 größer als dessen Höhe 34, beides gemessen in der gezeigten Betriebsstellung, ist.

Die Kanalwand 6 des Spanabsaugkanals 1, welche den Transporthohlraum 5 teilweise umgibt, ist erfindungsgemäß als ein Teilbereich eines Strangpressprofiles 7 ausgebildet. Die Versteifungswände 14 zur Aussteifung der Kanalwand 6 sind mit der Kanalwand 6 im Strangpressprofil 7 einstückig verbunden. Diese Versteifungswände 14 des Strangpressprofils 7 schließen jeweils Hohlräume 13 ein. Die den Transporthohlraum 5 begrenzende Oberfläche 8 der Kanalwand 6 ist, in den in den Fig. 2 bis 5 gezeigten Querschnitten normal zur Längserstreckung 9 des Transporthohlraums 5 gesehen, zumindest bereichsweise gerundet ausgebildet. Sie weist die gerundet ausgebildeten Bereiche 10, aber auch einen gerade ausgebildeten Bereich 12 auf, wie dies in den Fig. 3 bis 5 gut zu erkennen ist. Die gerundeten Bereiche 10 der den Transporthohlraum 5 begrenzenden Oberfläche 8 der Kanalwand 6 nehmen in dem hier gezeigten Ausführungsbeispiel in Summe mehr als 50 % des Gesamtumfangs, gesehen im Querschnitt normal zur Längserstreckung 9 des Transporthohlraums, ein. Es können unterschiedliche Bereiche 10 der Oberfläche 8 mit gleichen oder auch voneinander verschiedenen Krümmungsradien realisiert sein. Wie eingangs erläutert, betragen bevorzugte Krümmungsradien der als gerundet ausgebildeten Bereiche 10 der den Transporthohlraum 5 begrenzende Oberfläche 8 der Kanalwand 6 zumindest das Zehnfache, vorzugsweise das Zwanzigfache, der Dicke 11 der Kanalwand 6. Im gezeigten Ausführungsbeispiel hat der Transporthohlraum 5 in dem gezeigten Querschnitt normal zur Längserstreckung 9 des Transporthohlraums 5 annähernd eine Tropfenform. Es sind aber auch viele andere Querschnittsformen beim Strangpressen des Strangpressprofils 7 und damit der Kanalwand 6 möglich. Der für den Spanabsaugstutzen 16 vorgesehene Öffnungsschlitz 15 in der Kanalwand 6 verläuft in den Fig. 2 bis 5 normal bzw. orthogonal zur jeweiligen Zeichenebene.

Damit der Öffnungsschlitz 15 in den Bereichen, in denen sich der Spanabsaugstutzen 16 gerade nicht befindet, abgedeckt werden kann, weist der Spanabsaugkanal 1 die hier elastisch ausgebildete Abdecklippe 17 auf. Diese ist reversibel zwischen der Abdeckstellung gemäß Fig. 3 und der Auslenkstellung gemäß Fig. 4 auslenkbar. In der Abdeckstellung wird der Öffnungsschlitz 15 von der Abdecklippe 17, vorzugsweise vollständig, abgedeckt. In der Auslenkstellung ermöglicht die Abdecklippe 17 das Hineinreichen des Spanabsaugstutzens 16 in den Transporthohlraum 5, wie dies in Fig. 4 dargestellt ist. Günstigerweise ist die Abdecklippe 17 so ausgebildet, insbesondere elastisch, dass sie möglichst überall dort, wo sich der Spanabsaugstutzen 16 im Moment nicht befindet, in der Abdeckstellung den Öffnungsschlitz 15 abdeckt und nur im Bereich des Spanabsaugstutzens 16 in der Auslenkstellung angeordnet ist. Vor und hinter dem Absaugstutzen 16 ergibt sich meist ein gewisser Übergangsbereich, dessen Länge u.a. auch von der Steifigkeit bzw. Ausbildung der Abdecklippe 17 abhängt.

Um die Abdecklippe 17 am Strangpressprofil 7 befestigen zu können, weist das hier gezeigte bevorzugte Ausgestaltungsbeispiel des Strangpressprofils 7 eine entlang des Öffnungsschlitzes 15 verlaufende Aufnahme 18 für die Abdecklippe 17 auf. In der gezeigten Ausführungsform ist die Abdecklippe 17 in der Aufnahme 18 mittels Verschrauben oder Vernieten befestigt. Alternativ können natürlich auch andere Befestigungsformen wie z.B. Einkleben, Einklemmen oder dergleichen genutzt werden. Auf der gegenüberliegenden Seite des Öffnungsschlitzes 15 weist das Strangpressprofil 7 die ebenfalls entlang des Öffnungsschlitzes 15 verlaufende Anlageleiste 19 für die Abdecklippe 17 auf. Die Abdecklippe 17 liegt in ihrer Abdeckstellung gemäß Fig. 3 günstigerweise so an der Anlageleiste 19 an, dass sich praktisch eine vollständige Abdichtung in diesem Bereich ergibt.

In Fig. 4 ist gut zu sehen, dass bei der Erfindung der Spanabsaugstutzen 16, in dem Querschnitt normal zur Längserstreckung des Transporthohlraums 5 gesehen, tangential in den Transporthohlraum 5 mündet. Dies ist eine der Maßnahmen, um den aus dem Spanabsaugstutzen 16 austretenden und in den Transporthohlraum 5 eintretenden Strom aus Luft und Sägespänen mit einem Drall zu versehen, wie er durch den Strömungspfeil 29 in Fig. 3 und 4 veranschaulicht wird. Eine andere Maßnahme zur Erzeugung dieses Dralls beim Absaugen des Span- Luftgemisches ist die teilweise gerundete Ausbildung der den Transporthohlraum 5 umgebenden Oberfläche 8 der Kanalwand 6. Die Querschnittsform des Transporthohlraums 5 ist günstigerweise über die ganze Längserstreckung des Strangpressprofils 7 konstant.

An einem Ende des Strangpressprofils 7 wird in bevorzugten Ausgestaltungsformen zum abdichtenden Abschluss des Transporthohlraums 5 ein Deckel 30 angebracht. Dies ist in Fig. 5 dargestellt. In der hier gezeigten Ausgestaltungsform weist der Deckel 30 einen Flansch 32 auf, der so ausgestaltet ist, dass er an der Oberfläche 8 der Kanalwand 6 anliegt. Der Deckel 30 kann mittels Schrauben 31, Nieten, Verkleben oder durch andere Befestigungsarten am Strangpressprofil 7 befestigt werden. In diesem Endbereich des Spanabsaugkanals 1 kann auch die Abdecklippe 17 mittels Schrauben 31, Nieten oder anderen geeigneten Befestigungsvarianten am Deckel 30 bzw. an seinem Flansch 31 befestigt werden. Der Deckel 30 kann z.B. aus Kunststoff oder Metall ausgebildet sein. Am gegenüberliegenden Ende des Transporthohlraums 5 bzw. des Strangpressprofils 7 kann entweder direkt das Sauggebläse 20 oder in analoger Weise zum Deckel 30 ein, bevorzugt trichterförmiges, Absaugstutzenstück befestigt sein. Dieses kann z.B. in einen Schlauch münden, welcher dann zu einer entsprechenden Absauganlage 20 führt.

**Legende zu den Hinweisziffern:**

| | | | |
|---|---|---|---|
| 1 | Spanabsaugkanal | 29 | Strömungspfeil |
| 2 | Sägeeinrichtung | 30 | Deckel |
| 3 | Sägeblatt | 31 | Schrauben |
| 4 | Sägelinie | 32 | Flansch |
| 5 | Transporthohlraum | 33 | Breite |
| 6 | Kanalwand | 34 | Höhe |
| 7 | Strangpressprofil | | |
| 8 | Oberfläche | | |
| 9 | Längserstreckung | | |
| 10 | gerundet ausgebildeter Bereich | | |
| 11 | Dicke | | |
| 12 | gerader Bereich | | |
| 13 | zusätzlicher Hohlraum | | |
| 14 | Versteifungswand | | |
| 15 | Öffnungsschlitz | | |
| 16 | Spanabsaugstutzen | | |
| 17 | Abdecklippe | | |
| 18 | Aufnahme | | |
| 19 | Anlageleiste | | |
| 20 | Absauganlage | | |
| 21 | Maschinentisch | | |
| 22 | Steher | | |
| 23 | Druckbalken | | |
| 24 | Druckbalkenabsaugstutzen | | |
| 25 | Werkstück | | |
| 26 | Fuß | | |
| 27 | Boden | | |
| 28 | Sägewagen | | |

## Patentansprüche

1. Anordnung aus einem Spanabsaugkanal (1) für eine Sägeeinrichtung (2), bei der zumindest ein Sägeblatt (3) entlang einer Sägelinie (4) verfahrbar ist, und einem Spanabsaugstutzen (16), wobei der Spanabsaugkanal (1) einen längserstreckten Transporthohlraum (5) zum Transport der Sägespäne und eine den Transporthohlraum (5) zumindest teilweise umgebende Kanalwand (6) aufweist und die Kanalwand (6) einen entlang der Längserstreckung (9) des Transporthohlraums (5) verlaufenden Öffnungsschlitz (15) zum Einführen des Spanabsaugstutzens (16) von außen in den Transporthohlraum (5) aufweist, **dadurch gekennzeichnet, dass** die Kanalwand (6) ein Strangpressprofil (7) oder ein Teilbereich eines Strangpressprofils (7) ist oder aus zumindest zwei Strangpressprofilen (7) oder aus Teilbereichen von zumindest zwei Strangpressprofilen (7) zusammengesetzt ist und die den Transporthohlraum (5) begrenzende Oberfläche (8) der Kanalwand (6), in einem Querschnitt normal zur Längserstreckung (9) des Transporthohlraums (5) gesehen, zumindest bereichsweise gerundet ausgebildet ist und der Spanabsaugstutzen (16), in dem Querschnitt normal zur Längserstreckung des Transporthohlraums (5) gesehen, tangential in den Transporthohlraum (5) mündet.

2. Anordnung nach Anspruch 1, **dadurch gekennzeichnet, dass** das Strangpressprofil (7) oder die Strangpressprofile (7) Aluminium aufweist bzw. aufweisen oder daraus besteht bzw. bestehen.

3. Anordnung nach Anspruch 1 oder 2, **dadurch gekennzeichnet, dass** der Krümmungsradius aller gerundet ausgebildeten Bereiche (10) der den Transporthohlraum (5) begrenzenden Oberfläche (8) der Kanalwand (6), in dem Querschnitt normal zur Längserstreckung (9) des Transporthohlraums (5) gesehen, größer als das Zehnfache, vorzugsweise größer als das Zwanzigfache, der Dicke (11) der Kanalwand (6) ist.

4. Anordnung nach einem der Ansprüche 1 bis 3, **dadurch gekennzeichnet, dass** die den Transporthohlraum (5) begrenzende Oberfläche (8) der Kanalwand (6), in dem Querschnitt normal zur Längserstreckung (9) des Transporthohlraums (5) gesehen, zu zumindest 30%, vorzugsweise zu zumindest 50 %, ihres Gesamtumfangs gerundet ausgebildet ist.

5. Anordnung nach einem der Ansprüche 1 bis 4, **dadurch gekennzeichnet, dass** die den Transporthohlraum (5) begrenzende Oberfläche (8) der Kanalwand (6), in dem Querschnitt normal zur Längserstreckung (9) des Transporthohlraums (5) gesehen, neben den gerundet ausgebildeten Bereichen (10) auch gerade Bereiche (12) aufweist.

6. Anordnung nach einem der Ansprüche 1 bis 5, **dadurch gekennzeichnet, dass** das Strangpressprofil (7) oder die Strangpressprofile (7) zumindest eine außen an der Kanalwand (6) angeordnete, vorzugsweise zumindest einen zusätzlichen Hohlraum (13) einschließende, Versteifungswand (14) zur Versteifung der Kanalwand (6) aufweist bzw. aufweisen.

7. Anordnung nach einem der Ansprüche 1 bis 6, **dadurch gekennzeichnet, dass** der Spanabsaugkanal (1) eine, vorzugsweise elastische, Abdecklippe (17) zum Abdecken des Öffnungsschlitzes (15) aufweist.

8. Anordnung nach Anspruch 7, **dadurch gekennzeichnet, dass** die Abdecklippe (17) reversibel zwischen einer Abdeckstellung, in der sie den Öffnungsschlitz (15) abdeckt, und einer Auslenkstellung zum Einführen des Spanabsaugstutzens (16) von außen in den Transporthohlraum (5) auslenkbar ist.

9. Anordnung nach einem der Ansprüche 1 bis 8, **dadurch gekennzeichnet, dass** das Strangpressprofil (7) oder die Strangpressprofile (7) eine entlang des Öffnungsschlitzes (15) verlaufende Aufnahme (18) für eine bzw. die Abdecklippe (17) aufweist bzw. aufweisen.

10. Anordnung nach einem der Ansprüche 1 bis 9, **dadurch gekennzeichnet, dass** das Strangpressprofil (7) oder die Strangpressprofile (7) eine entlang des Öffnungsschlitzes (15) verlaufende Anlageleiste (19) für eine bzw. die Abdecklippe (17) aufweist bzw. aufweisen.

11. Sägeeinrichtung (2) mit zumindest einem, entlang einer Sägelinie (4) verfahrbaren, Sägeblatt (3) und einer Anordnung nach einem der Ansprüche 1 bis 10 mit dem Spanabsaugkanal (1) zum Absaugen von vom Sägeblatt (3) erzeugten Sägespänen.

12. Verfahren zur Herstellung einer Anordnung nach einem der Ansprüche 1 bis 10, **dadurch gekennzeichnet, dass** die Kanalwand (6) des Spanabsaugkanals (1) als ein Strangpressprofil (7) oder als ein Teilbereich eines Strangpressprofils (7) hergestellt wird oder aus zumindest zwei Strangpressprofilen (7) oder aus Teilbereichen von zumindest zwei Strangpressprofilen (7) zusammengesetzt wird.

## Claims

1. An arrangement consisting of a chip extraction duct (1) for a sawing means (2), in which at least one saw blade (3) can be moved along a sawing line (4), and of a chip extraction pipe (16), wherein the chip extraction duct (1) has an elongate transport cavity (5) for transporting the sawdust and a duct wall (6) at least partially surrounding the transport cavity (5), and the duct wall (6) has an opening slot (15) which extends along the longitudinal extent (9) of the transport cavity (5) for introducing the chip extraction pipe (16) from outside into the transport cavity (5), **characterised in that** the duct wall (6) is an extruded profile (7) or a partial region of an extruded profile (7) or is composed of at least two extruded profiles (7) or of partial regions of at least two extruded profiles (7) and the surface (8) of the duct wall (6) which delimits the transport cavity (5), viewed in a cross-section normal to the longitudinal extent (9) of the transport cavity (5), is formed rounded at least in regions and the chip extraction pipe (16), viewed in the cross-section normal to the longitudinal extent of the transport cavity (5), opens tangentially into the transport cavity (5).

2. An arrangement according to Claim 1, **characterised in that** the extruded profile (7) or the extruded profiles (7) contains or contain aluminium or consists or consist thereof.

3. An arrangement according to Claim 1 or 2, **characterised in that** the radius of curvature of all the rounded regions (10) of the surface (8) of the duct wall (6) which delimits the transport cavity (5), viewed in the cross-section normal to the longitudinal extent (9) of the transport cavity (5), is greater than ten times, preferably greater than twenty times, the thickness (11) of the duct wall (6).

4. An arrangement according to one of Claims 1 to 3, **characterised in that** the surface (8) of the duct wall (6) which delimits the transport cavity (5), viewed in the cross-section normal to the longitudinal extent (9) of the transport cavity (5), is formed rounded for at least 30%, preferably at least 50%, of its total periphery.

5. An arrangement according to one of Claims 1 to 4, **characterised in that** the surface (8) of the duct wall (6) which delimits the transport cavity (5), viewed in the cross-section normal to the longitudinal extent (9) of the transport cavity (5), also has straight regions (12) in addition to the rounded regions (10).

6. An arrangement according to one of Claims 1 to 5, **characterised in that** the extruded profile (7) or the extruded profiles (7) has or have at least one reinforcing wall (14) for reinforcing the duct wall (6), arranged externally on the duct wall (6) and enclosing preferably at least one additional cavity (13).

7. An arrangement according to one of Claims 1 to 6, **characterised in that** the chip extraction duct (1) has a, preferably elastic, covering lip (17) for covering the opening slot (15).

8. An arrangement according to Claim 7, **characterised in that** the covering lip (17) can be deflected reversibly between a covering position in which it covers the opening slot (15) and a deflection position for introducing the chip extraction pipe (16) from the outside into the transport cavity (5).

9. An arrangement according to one of Claims 1 to 8, **characterised in that** the extruded profile (7) or the extruded profiles (7) has or have a receptacle (18) extending along the opening slot (15) for a or the covering lip (17).

10. An arrangement according to one of Claims 1 to 9, **characterised in that** the extruded profile (7) or the extruded profiles (7) has or have a contact strip (19) extending along the opening slot (15) for a or the covering lip (17).

11. A sawing means (2) with at least one saw blade (3) which is movable along a sawing line (4) and an arrangement according to one of Claims 1 to 10 with the chip extraction duct (1) for extracting sawdust produced by the saw blade (3).

12. A method for producing an arrangement according to one of Claims 1 to 10, **characterised in that** the duct wall (6) of the chip extraction duct (1) is produced as an extruded profile (7) or as a partial region of an extruded profile (7) or is composed of at least two extruded profiles (7) or from partial regions of at least two extruded profiles (7).

## Revendications

1. Agencement composé d'un canal d'aspiration de copeaux (1) pour un dispositif de sciage (2) dans lequel au moins une lame de scie (3) peut être déplacée le long d'une ligne de sciage (4), et d'une buse d'aspiration de copeaux (16), le canal d'aspiration de copeaux (1) présentant un espace creux de transport (5) s'étendant en longueur pour le transport des copeaux et une paroi de canal (6) entourant, du moins en partie, l'espace creux de transport (5) et la paroi de canal (6) présentant une fente d'ouverture (15), passant le long de l'étendue en longueur (9) de l'espace creux de transport (5) pour l'introduction de la buse d'aspiration de copeaux (16) dans l'espace creux de transport (5) depuis l'extérieur, **caractérisé en ce que** la paroi de canal (6) est un profilé extrudé (7) ou une zone partielle d'un profilé extrudé (7) ou est constituée d'au moins deux profilés extrudés (7) ou de zones partielles d'au moins deux profilés extrudés (7) et la surface (8) de la paroi de canal (6), limitant l'espace creux de transport (5), dans une section vue normalement par rapport à l'étendue en longueur (9) de l'espace creux de transport (5), est arrondie, du moins par endroits, et la buse d'aspiration de copeaux (16), dans la section vue normalement par rapport à l'étendue en longueur de l'espace creux de transport (5), débouche tangentiellement dans l'espace creux de transport (5).

2. Agencement selon la revendication 1, **caractérisé en ce que** le profilé extrudé (7) ou les profilés extrudés (7) présente(nt) de l'aluminium ou est ou sont constitué(s) d'aluminium.

3. Agencement selon la revendication 1 ou la revendication 2, **caractérisé en ce que** le rayon de courbure de toutes les zones arrondies (10) de la surface (8) de la paroi de canal (6) limitant l'espace creux de transport (5), dans la section vue normalement par rapport à l'étendue en longueur (9) de l'espace creux de transport (5), mesure plus de dix fois, de préférence plus de vingt fois, l'épaisseur (11) de la paroi de canal (6).

4. Agencement selon l'une quelconque des revendications 1 à 3, **caractérisé en ce que** la surface (8) de la paroi de canal (6) limitant l'espace creux de transport (5), dans la section vue normalement par rapport à l'étendue en longueur (9) de l'espace creux de transport (5), est arrondie à au moins 30 %, de préférence à au moins 50 %, de son circonférence totale.

5. Agencement selon l'une quelconque des revendications 1 à 4, **caractérisé en ce que** la surface (8) de la paroi de canal (6) limitant l'espace creux de transport (5), dans la section vue normalement par rapport à l'étendue en longueur (9) de l'espace creux de transport (5), présente, outre les zones arrondies (10), également des zones droites (12).

6. Agencement selon l'une quelconque des revendications 1 à 5, **caractérisé en ce que** le profilé extrudé (7) ou les profilés extrudés (7) présente(nt) du moins une paroi de rigidification (14) disposée à l'extérieur sur la paroi de canal (6), de entourant préférence du moins un espace creux (13) supplémentaire afin de rigidifier la paroi de canal (13).

7. Agencement selon l'une quelconque des revendications 1 à 6, **caractérisé en ce que** le canal d'aspiration de copeaux (1) présente une bavette de recouvrement élastique (17) pour le recouvrement de la fente d'ouverture (15).

8. Agencement selon la revendication 7, **caractérisé en ce que** la bavette de recouvrement (17) est orientable de manière réversible entre une position de recouvrement, dans laquelle elle recouvre la fente d'ouverture (15), et une position déviée pour introduire la buse d'aspiration de copeaux (16) dans l'espace creux de transport depuis l'extérieur.

9. Agencement selon l'une quelconque des revendications 1 à 8, **caractérisé en ce que** le profilé extrudé (7) ou les profilés extrudés (7) présente(nt) un logement (18) passant le long de la fente d'ouverture (15) pour une respectivement la bavette de recouvrement (17).

10. Agencement selon l'une quelconque des revendications 1 à 9, **caractérisé en ce que** le profilé extrudé (7) ou les profilés extrudés (7) présente(nt) une baguette de butée (19) passant le long de la fente d'ouverture (15) pour une respectivement la bavette de recouvrement (17).

11. Dispositif de sciage (2) comportant au moins une lame de scie (3) pouvant être déplacée le long d'une ligne de sciage (4) et un agencement selon l'une quelconque des revendications 1 à 10 comportant le canal d'aspiration de copeaux (1) pour l'aspiration de copeaux générés par la lame de scie (3).

12. Procédé de fabrication d'un agencement selon l'une quelconque des revendications 1 à 10, **caractérisé en ce que** la paroi de canal (6) du canal d'aspiration de copeaux (1) est confectionnée en tant que profilé extrudé (7) ou zone partielle d'un profilé extrudé (7) ou est constitué d'au moins deux profilés extrudés (7) ou de zones partielles d'au moins deux profilés extrudés (7).
